# EUROPEAN PATENT APPLICATION

(11) **EP 1 717 079 A1**
(43) Date of publication of application: **02.11.2006**
(21) Application number: 05381020.6
(22) Date of filing: 28.04.2005
(51) Int. Cl.: B60J 7/00

(54) **Shading device for vehicle roofs with a transparent element**

(71) Applicant: GRUPO ANTOLIN-INGENIERIA, S.A., 09007 Burgos (ES)
(72) Inventor: Santaolalla Gil, Joaquin, 09007 Burgos (ES); Gonzalez Saiz, José Ignacio, 09007 Burgos (ES); Manzanedo Gonzalez, Javier, 09007 Burgos (ES)
(74) Representative: Esteban Perez-Serrano, Maria Isabel

(57) **Abstract**

The present invention relates to a shading device for vehicle roofs with a transparent element by means of a flexible sheet (1). This flexible sheet (1) has some stiffening slats (2) initially stowed next to the roller drum and which are trapped and pulled by some pockets (8) during the extension. The device avoids the appearance of wrinkles by making use of some transversal rods (3) which descend until applying pressure on the pockets (8) when the latter have trapped the slat. The same invention envisages a set of improvements in the elements which intervene.

## Description

### OBJECT OF THE INVENTION

The present invention relates to a shading device for vehicle roofs with a transparent element.

The essential object of the present invention is a shading device, or means of protection, applicable to roofs with wide-span transparent elements of vehicles by means of a flexible laminar element. For protection by a flexible laminar element of a wide area it is necessary to establish means which assure it is taught in all points and in the two main directions.

The present invention is characterized in the use of strong and stiffening elements such as slats with a device which applies a tightening force from above adaptable to the pulling pockets of the flexible laminar element. This forcing element is pulled together with the slat and descends to apply its forcing action at the moment in which the slat is trapped by the pulling pocket.

This same invention includes an improvement on the configuration of the slat which produces an easier entry into the pocket which pulls it.

This device is likewise characterized in the combination of a selection of the slat to be pulled by the pocket by the use of different heights together with additional options such as a tilting of the slat most proximate to the roller drum of the flexible laminar element.

The combination of these solutions gives rise to an appropriate selection of the slat to be pulled in such a way that in any position of extension of the flexible laminar element the absence of wrinkles is assured.

### BACKGROUND OF THE INVENTION

Flexible elements are known in the state of the art intended to cover vehicle roofs internally when these roofs incorporate transparent elements and thereby achieve greater comfort for the occupants.

Flexible elements of laminar type like curtains can be found, such that their ends are guided by means of rails. It is also usual to find intermediate rods which are joined to the curtain and which acquire the curve of the vehicle roof so that the curtain adopts a surface adapted to the geometry of the roof.

An example is the US patent 6,161,893 which relates to a sunshade for an automobile roof. The curtain has a plurality of rods attached which are flexible. The rods and the curtain are wrapped together so that the rods remain extended with the curtain when it is stowed in its housing. When unwrapping the curtain, the rods are guided by rails which narrow diminishing the distance between the ends thereof through a step and forcing a slight bowing of the flexible rods to adapt to the shape of the roof.

The patent JP63258213 also makes reference to a curtain to cover the roof in automobiles. The curtain is rolled together with some flexible rods which remain extended when the curtain is folded. Although it makes use of a configuration of its different components the curtain is drawn and the rods are bowed on being guided over some tracks which maintain permanently between themselves a distance less than the length of the rods. In this document the rods are also fixed to the curtain.

The patent EPO1127722 describes in one of its embodiments a curtain for vehicle roofs which is formed by several layers of a flexible material. These layers are of different length and they progressively overlap on each other all starting from one end. The layers are sewn forming closed pockets. A flexible rod is housed inside each pocket. These rods are not fixed to the curtain in a fixed position, but instead they can be moved inside each pocket. When the curtain is drawn in, all the rods are brought together in a same point. The folded curtain occupies considerable space due to the layers that constitute the curtain. When the curtain is deployed, the rods are restored to their previous lodgings, according to the direction of deploying the curtain, in each of the pockets being thereby pulled to their definitive position resulting in one position of all the equally distributed rods.

One of the drawbacks presented by these devices is that use is made of a great quantity of material as in the case of curtains with closed pockets. This also signifies a greater weight to be pulled and more space occupied as well as a greater number of operations to produce the closed pockets.

Another of the drawbacks, is that when the surface to be concealed is large, wrinkles are formed in the curtain for the lack of a transversal tension which prevents the formation thereof.

This problem has been resolved as disclosed in the European patent with application number EP04381047.2 by making use of some slats with oblique lateral kinks which wedge in some open pockets which trap the slats for pulling them. During the extension the longitudinal tension is assured by the front pulling slat and the transversal tension is due to the wedging with the slats.

The present invention, making use of this particular solution, incorporates a set of mechanisms which assure the longitudinal and transversal tension in a greater measure even under highly unfavourable conditions without wrinkles appearing.

### DESCRIPTION OF THE INVENTION

The present invention consists of a shading device for vehicle roofs with a transparent element by means of a flexible laminar element which is adjustable in different positions, that is, it accepts partial degrees of extension.

Thanks to new materials, it is increasingly frequent to find roofs produced in a transparent material of a much greater size than those utilized up to the present time. Currently, there is a tendency toward the transparent segment almost enclosing the entirety of the roof surface. This allows a greater view of the external surroundings and therefore of communication with the environment.

At the same time, the employment of wide transparent roofs causes the sun's rays to impinge directly upon the occupants of the vehicle. Consequently, it is necessary to cover the transparent segment so that the degree of concealment can be regulated and therefore the comfort inside the passenger compartment improved.

When the area to be covered is extensive and corresponds to large widths, it is necessary to provide means that assure the longitudinal and transversal tension of the flexible laminar element employed over the full length even with curvature.

During the extension, the longitudinal tension is present in a natural manner since it produced by the pulling of the strong frontal element; however, in the operation of stowing the flexible laminar element the tension of the roller drum may be insufficient since the displacement in the opposite sense of the frontal strong element tends to reduce the longitudinal traction. This is one of the main problems which the present invention resolves.

The fundamental operating scheme is based on mounting in the rear part of the roof a roller drum of a flexible sheet which, through the pulling action of the frontal strong element, it is extended covering the transparent area. Hereinafter both the frontal strong element and other stiffening strong elements can be termed slats. The slats will be used mainly in the example of the invention as a particular case of major interest; however, the invention is more extensive since for the strong element it is possible to make use of profiles of different configuration, rods or bundles of rods, and others. Thus, the use of the word "slat" for the sake of greater clarity in the description should be interpreted from the technical point of view in a broader sense as the aforesaid strong element.

Since the area to cover is very large slats exist which are moveable on rails which contribute with their stiffness to the flexible sheet not presenting wrinkles. These slats are stowed in the rear part proximate to the roller drum.

The flexible sheet has some pockets, open or closed, which emerge progressively as the sheet is unrolled. Each of the pockets traps a slat, that which at that moment is stowed in the position furthest from the roller drum, and pulls it at the same time as the sheet is extended.

The object of the present invention consists of a collection of technical solutions and means intended to assure the longitudinal and transversal tension of the flexible sheet allowing the appropriate selection of the slat which corresponds to each pocket.

These means consist of a mechanism of capturing the pulling pocket of the slat by means of a rod or similar which rests on the slat. Thus, the pocket is trapped between the slat and the rod over the full length of the slat. A rod or similar is mentioned because just as with the slats, the rods can be strong elements of many configurations and structures. The word rod will continue to be used for the clarity in the explanation and should be interpreted as a transversal strong element.

The assembly formed by the strong element, such as a slat, plus the mechanism of trapping the pulling pocket assures that the flexible laminar element and this assembly are integral during the extension and likewise during the stowing of the flexible laminar element avoiding the appearance of wrinkles in the longitudinal direction.

As a final clarification in this respect, as a generic expression the term of first strong element or pulling slat will be used for the front element, second strong elements or intermediate slats for those which are displaced pulled by the pockets and third strong element or rod for the element serving to trap the pocket on top.

This rod of the pocket-trapping mechanism is secured on its ends to a tilting support which is pulled jointly with the slat. In the moment when the slat is trapped by the pulling pocket, the displacement movement of the assembly causes the support to descend and therefore the rod as well. This downward movement is produced because the support of the rod has a nipple or lateral pivot which runs along an appropriate channel parallel to the rail of the slat so that at a given point it descends until converging with the rail of the slat.

When the nipple descends and is incorporated in the displacement rail of the slat, the rod is made to descend and press against the upper surface of the pocket in which the slat is lodged.

The slat has a longitudinal protuberance located slightly displaced with respect to the place where the rod is supported. This configuration gives rise to a slightly sinuous path which facilitates the securing of the pocket between the rod and the slat.

To improve this support and securing, the use has also been foreseen of a band in the rim of the pocket. Initially the band maintains the pocket open to facilitate the slat entering therein and it also allows the support of the rod to be carried out by applying pressure in a uniform manner over its full length.

During the withdrawal, the movement is the opposite, the nipple of the support of the rod reaches a point where it finds the entrance to its channel and, although this entrance is in the upper part of the rail, the support of the rod has a recovery spring which makes this tend to rise and therefore enter into its channel.

The entry into its auxiliary channel signifies the rod is raised and releases the pocket so that it abandons the slat when the latter comes to rest on its ends at the end of its travel. The pocket finishes by being rolled on the roller drum.

This mechanism described to maintain the longitudinal tension of the flexible laminar element is valid making use of open and closed pockets. Additionally it has means that allow a correct operation in the moment of trapping and releasing the slats with the pockets when these are open.

During the process of unrolling from the drum the first pocket to emerge is the first one and then the second and so forth; however, the order in which the slats are encountered is just the opposite.

The simplest case is that which only has two slats. The emergence of the first pocket encounters the second slat for which reason it must pass over it without trapping it. This same pocket, on continuing to advance encounters the first slat, and this is the one which must be trapped.

In this same invention use is made of a selection method not described in the patents mentioned in the section dedicated to the state of the art and it consists in making use of different heights as a means for selection of the slat which has to be trapped by a certain pocket.

In the process of unrolling, the rolled diameter decreases. Since the unrolling takes place in the lower part, the emergence of the flexible laminar element takes place along a line which is progressively rising. This mechanism of elevation of the emergence line is the essential principle which will be used to determine what slat is to be caught with the pocket which emerges on being unrolled.

At the outset the roller drum has its maximum diameter whereby the flexible laminar element emerges from the lowest point. Since the first pocket has to pass over the second slat without trapping it, the latter being that which is first encountered, it is necessary that it pass below it without catching it.

The unrolling of the flexible sheet makes the line on which the unrolling takes place rise up, whereby the following pocket will be displaced in a higher position favouring the following interception.

When the variation in the height by unrolling is not sufficient, it is possible to consider additional means that favour the adequate selection.

The first of them is the incorporation of a pressure element formed for example by the insertion of a lower plate. The emergence of the first pocket takes place in a point sufficiently low so as not to trap the slat immediately adjacent to the roller drum and to assure that the slat which corresponds to it is trapped, the insertion establishes a point of support which raises the flexible laminar element, and therefore the pocket which it incorporates. This elevation takes place after the adjacent slat and allows the slat following to be assured when for example there are only two.

Another additional mechanism is also considered which favours the selection of the slat which corresponds by making use of a tilting of the slat adjacent to the roller drum. If it is continued to make use of two slats in this description, when they are stowed one rests against the other.

This support is produced by means of two surfaces wedged in such a way that the support implies the application of a force of vertical reaction on the edge of the slat adjacent to the roller drum which gives rise to a turning couple.

Since the seat in the guide of the carriage supporting the slat has a cavity at this point in the rail, the slat is provided with a limited capacity for turning. The action of gravity is that responsible for the slat having a tendency to rotate, the edge facing the roller drum descending. To the action of gravity must be added the reaction of the recovery spring of the pressure rod.

The reaction of the support of the wedges in fact maintains the second slat raised, favouring the passing of the first pocket underneath. After the first pocket passes and the first slat is carried away, the support between the wedged surfaces disappears. As a result of the absence of this reaction force, the second slat descends favouring the trapping thereof on the passing of the second pocket.

Although use has been made in the description of two slats and as will likewise be done in the detailed explanation of the diverse modes of embodiment of the invention, the use is possible of more strong stiffening elements. In these other second strong elements or slats it is possible likewise to incorporate, in pairs, wedges which impede tilting until the support disappears. If the first slat (or first strong element) impedes the tilting of the second slat, the second will impede the tilting of the third slat and so forth.

In particular, it is likewise possible to incorporate this wedge-type support in the frontal pulling slat operating jointly with the first slat. If the first slat impedes the turning of the second slat, here it is the frontal pulling slat which impedes the tilting of the first slat. In generic terms it could be said that the second strong elements or intermediate slats or the first strong element or pulling slat, or both, have surfaces wedged two by two, there being in each pair the potential to turn the strong element or slat proximate to the drum where a vertical resultant force is obtained with these wedged surfaces in the mutual support.

In this general scheme of the new invention other particular improvements have been incorporated with regard to the aforesaid state of the art which mainly affect the configuration of the slat as the strong element employed and which will be described in more detail in the example of embodiment.

### DESCRIPTION OF THE DRAWINGS

The present descriptive specification is completed with a set of drawings, which illustrate the preferred embodiment of the invention but without restricting the same.

Figure 1 is a schematic view in perspective of the segment to be covered by the flexible sheet showing an example of the invention which makes use of a roller, the lateral guides, two slats and the means of stabilization which make use of the rod.

Figures 2, 3, 4 and 5 are a view in perspective of the end of the slats and details of the guides and of the pockets, supports and rods in a sequence which shows how the movement is carried out which allows the slats to be trapped by means of open pockets and stabilize these with the rods.

Figure 6 shows a detail of the guide and the auxiliary guide of the nipple which forces the rod to descend.

Figure 7 is a detail of the end of the first slat of the example of embodiment of the invention in which the means are shown for tilting the supporting arm of the rod among others.

Figure 8 is a development drawing of the unrolling of the flexible sheet and of how the pockets trap the slats which correspond to them making use of the variation in height which is implied by the unrolling of the drum.

Figure 9 is a schematic similar to the previous one except that it only shows a single arrangement of the elements incorporating a stamped plate which favours the elevation of the flexible sheet where appropriate.

Figure 10.A shows two possible ways of implementing the V-shaped slat, one with a fluke constituted as an additional piece and the other with the fluke integrated in the slat itself.

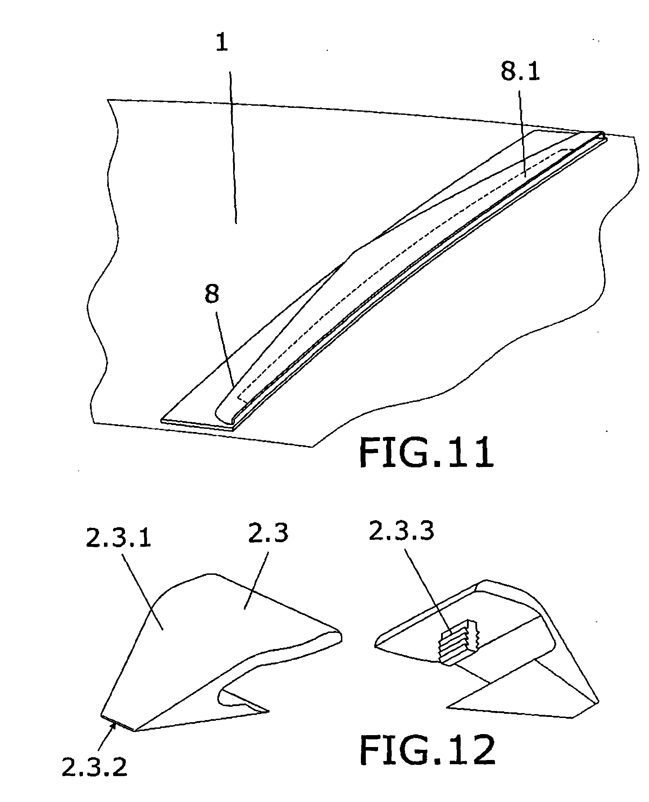

Figure 10.B is a schematic representing the forces acting on the edge of the slat which is being pressed with the bottom of the pocket. The forces acting have been decomposed into their longitudinal and transversal components.

Figure 11 is an example of a pocket with a band on its internal face.

Figure 12 is a detail of a mode of implementation of a fluke of those installable on the front of the slat.

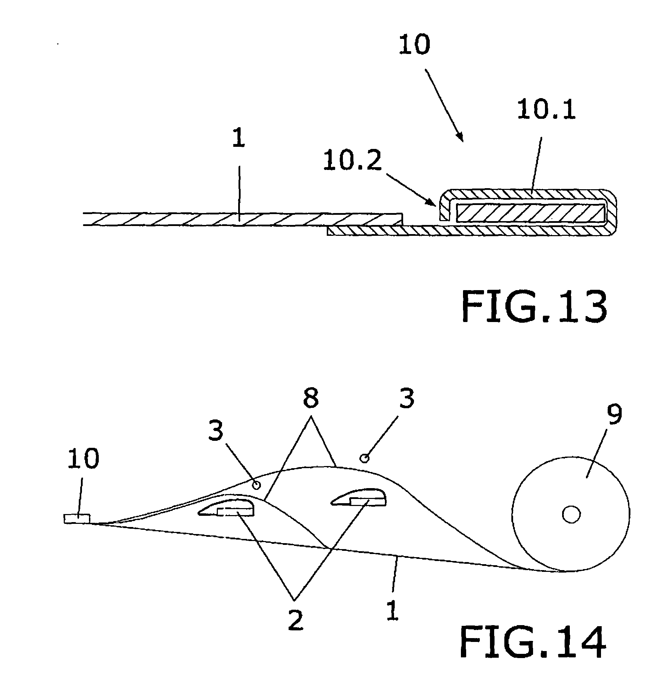

Figure 13 is a section of the pulling slat with snap-action coupling.

Figure 14 is a schematic of an example of how the invention could be put into practice making use of closed pockets.

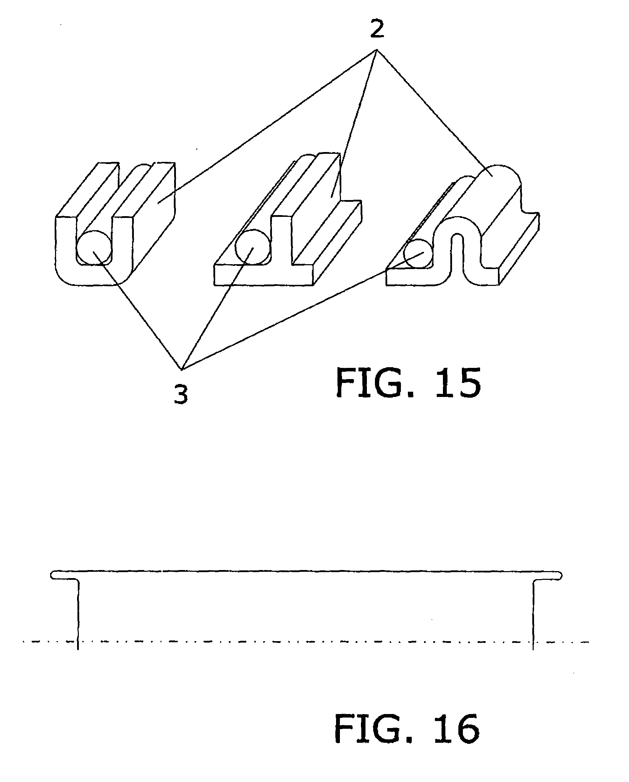

Figure 15 is a detail of diverse examples of profiles together with the retention rod taken as strong elements capable of fulfilling the function of the slat.

Figure 16 is a schematic in which the directrix of a rod is shown with diverse folds which allow the lateral pivots and the tilting arms to be integrated.

### DETAILED EXPLANATION OF DIVERSE MODES OF EMBODIMENT

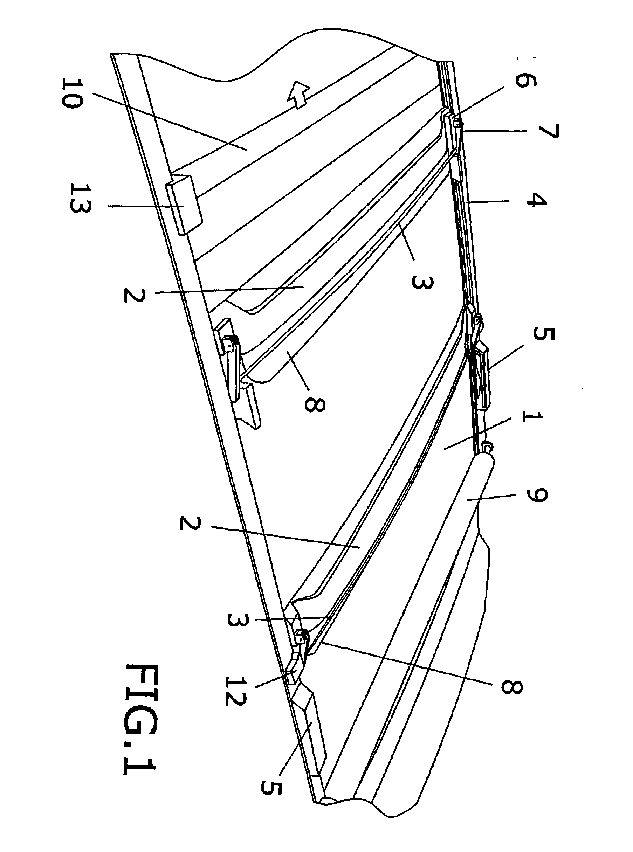

Figure 1 is a schematic view in perspective of the main parts of the shading device of the vehicle roof in partial cross section.

In this view the roller drum (9) is identified on the right in such a way that the flexible sheet (1) is unrolled underneath to be extended toward the left (according to the point of view chosen in the graphic representation) in order to cover the transparent area.

The extension is carried out by traction of the frontal pulling slat (10) which draws the flexible sheet (1). This pulling slat (10) is displaced along some lateral guides (4) which reveal a drive cable (11) in turn moved manually or by means of a motor.

The flexible sheet (1) has a set of pockets (8) on the internal face of the roll. Although the invention envisages open or closed pockets, in this example use will be made of open pockets (8). Nevertheless, at the end of the description of the example an explanation will also be included of a configuration by way of example of closed pockets.

These open pockets (8) progressively appear on the upper surface of the flexible sheet (1) during the unrolling. Since the area to be covered by the flexible sheet (1) is very wide it is necessary to include structural elements which stiffen the flexible sheet (1) to avoid the occurrence of wrinkles. Although use is made of the word stiffen, this must be interpreted as that by means of a rigid element (1) the flexible sheet is provided with both longitudinal and transversal tension sufficient for wrinkles not to be present.

The assembly of structural elements which stiffen the flexible sheet (1) together with their supports and other elements which allow the correct operation during extension and stowage are all object of the invention.

The structural element employed to stiffen the flexible sheet (1) is a slat (2). This slat (2) is intended to be housed in one of the pockets (8) which appear during the unrolling of the flexible sheet (1) to provide the sheet with the required longitudinal and transversal tension.

In this example of embodiment and for simplicity use will make of two slats (2). Initially, when the flexible sheet (1) begins to be unrolled, the slats (2) are gathered together proximate to the roller drum (9). The end position of each of the slats (2) is achieved because each of the pockets (8) which emerges from the roll traps the slat (2) which corresponds to it and pulls it to the position in which it is located after the extension of the flexible element be this total or partial.

It is necessary to describe in more detail the manner in which the entrance of the slat (2) takes place into the pocket (8) and the manner in which the selection of the slat (2) takes place according to the order of emergence of the pockets (8).

At the outset the slats (2) are as has been indicated, proximate to the roller drum (9) in an essentially coplanar arrangement.

Since the drum (9) is reducing its diameter progressively during the unrolling, originally the emergence of the first pocket (8) takes place along a line in a low position.

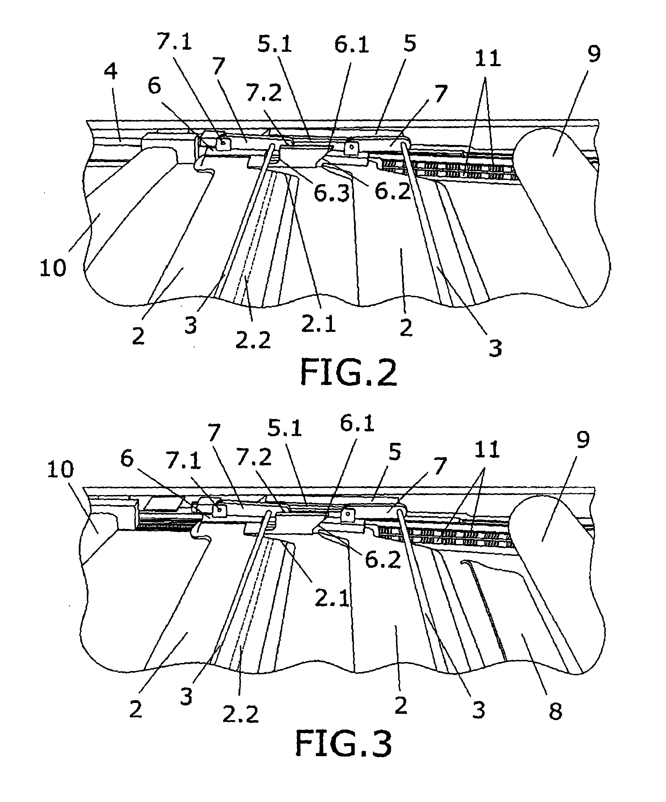

Figures 2, 3, 4 and 5 show a complete sequence of the emergence of the pockets (8). In figure 2 the two slats (2) are shown together. Each of the slats (2) has on its flank an oblique edge (2.1) which favours the transversal tension of the flexible sheet in the face of a force to enter the slat (2) into the pocket (8). The term first slat (2) will be given to the slat (2) on the left and second slat (2) to that on the right, that most proximate to the roller drum (9).

The slats (2) are secured laterally by means of some pulling carriages (6) which in turn are housed in the lateral guides (4) in which they slide. On the right side of the figures the pulling cables (11) are shown in their housing. In this case two are shown because one (11) drives the carriage of the pulling slat (10) and the other (11) corresponds to the stowing segment of the cable which drives the carriage (6) of the other side.

Second slat (2) has the capacity to rotate slightly about a transversal geometric axis so the edge oriented toward the roller drum (9) has a tendency to fall for gravity and for the thrust due to the reaction of a recovery spring (7.3) which will be described below.

This tendency to fall for gravity is impeded by the presence of a double wedged surface (6.1, 6.2), one surface (6.1) which pertains to the first slat (2) and the other (6.2) which pertains to the second slat (2).

The closing force between slats (2) gives as a result on the oblique wedged surface (6.2) of the second slat (2) a vertical component which is that which allows the second slat (2) to be maintained essentially coplanar with the first slat (2) since it does not allow it to fall.

In this same figure 2 the presence is observed of a support (7) tilting around an axle (7.1) from the end of which a rod (3) emerges. This rod (3) supported between two supports (7), one at each side, will be responsible for pressing on the edge of the pocket (8) which traps the slat (2) to assure no wrinkles are present. This element has special importance in this invention.

It is the sequence of the four figures which allows one to see clearly how the downward movement of the rod (3) is achieved to have the latter (3) apply the necessary pressure on the edge of the pocket (8).

In the four figures the presence is identified on the end of the tilting support (7) of the presence of a small circular mark. In this example it is found even beyond where the rod (3) emerges. This circular mark is actually the base of a nipple (7.2) which emerges from the side which is not seen and which is housed in a channel (5.1) of a secondary guide (5).

This channel (5.1) runs parallel to the guide (4) of the slats (2) in a higher position, with the result that the rod (3) is not pressing the pocket against the slat (2).

In figure 3 the pocket (8) is shown after having left the roller drum (9). The lower disposition thereof with respect to the second slat (2) is due to the roller having the greatest diameter and that the oblique wedged surfaces (6.1, 6.2) maintain the second slat (2) high. These are the reasons why the first pocket (8) passes underneath without touching the second slat (2) and of course it does so without trapping it.

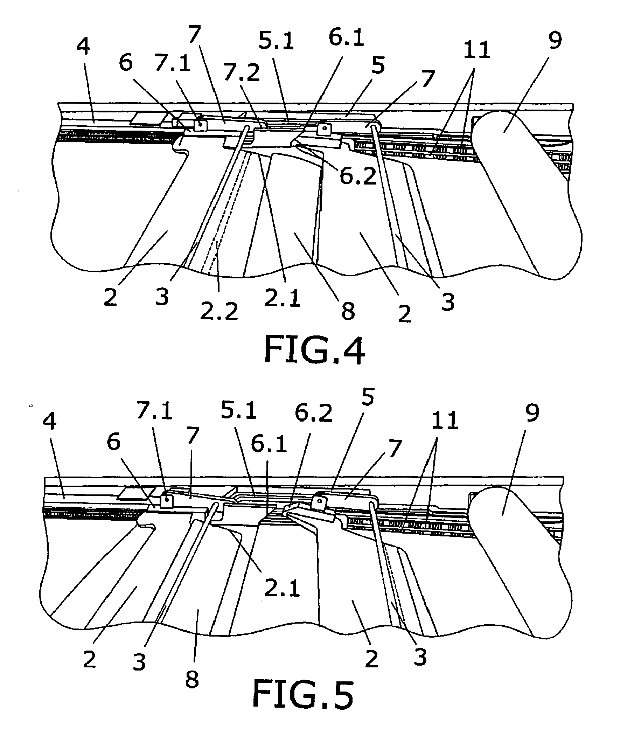

In figure 4 it is observed how the pocket (8), after passing over the second slat (8), traps the first slat (2) since during its motion it has been ascending until reaching the height of the front edge of the slat (2).

On reaching this point, the pocket (8) in its displacement pulls the first slat (2). In this displacement two effects take place simultaneously which are identified in the last figure of the sequence, figure 5.

The first effect is that of the rod (3) descending. In the displacement of the first slat (2), the nipple (7.2) of the tilting support (7) reaches the end of its channel (5.1) in the secondary guide (5). This channel (5.1) descends until converging in the main guide (4) so that the nipple (7.2) is also compelled to descend applying the tightening force against the slat (2).

The descent of the rod (3) is not impeded by the presence of the carriage because the latter has a recess (6.3) made therein which houses the rod (3).

The second effect is observed in the second slat (2). Since the two slats (2) have separated the force disappears between the wedged surfaces (6.1, 6.2) and therefore the vertical reaction also disappears which maintains the second slat (2) in a position essentially coplanar with the first slat (2).

When the vertical reaction on the second slat (2) disappears, the latter falls by the action of gravity and the reaction of the aforesaid spring (7.3) in such a way that it is now accessible for the second pocket (8). The second pocket (8) has risen too also due to the reduction of the diameter of the roller drum (9) facilitating the coincidence of the opening of the pocket (8) with the edge of the slat (2).

When the second pocket (8) traps the second slat (2) both are displaced until reaching their end or any intermediate position if it is not wished to cover the entirety of the transparent area of the roof.

In most of the slats (2) represented in this sequence two dashed lines are shown parallel to but not coincident with the rod (3). These correspond to a slight swelling (2.2) which makes the pocket (8) pressed by the rod (3) settle tracing a small undulation which improves the securing with the rod (3).

This configuration in the pressed mode can be more complicated as is shown in the details of figure 15 wherein sections of profiles are shown examples of strong elements employed instead of slats (2) in which the support of the rod (3) is carried out either on the flank of a protuberance or swelling or even by establishing an individual housing. All of them are ways of trapping the pocket (8).

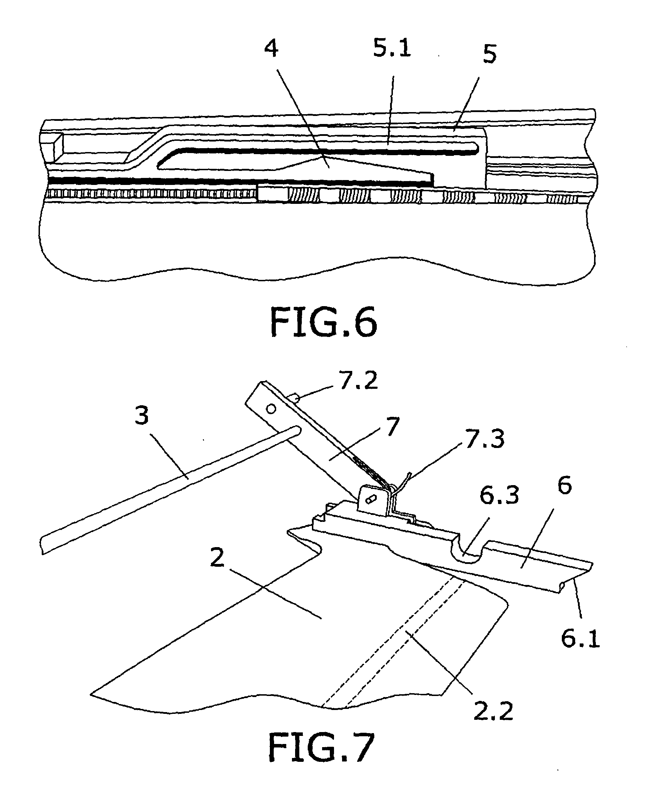

Figure 6 is a detail of the secondary guide (5) which has the channel (5.1) in which the nipple (7.2) slides which drives the descent of the tilting arm (7). The lower surface of this channel (5.1) has been coloured black to help to distinguish it. It can be verified how, at the left, the channel (5.1) converges with the channel of the main guide (4).

In turn, the final segment of guide (4) which in this mode of embodiment falls under the secondary guide (5) shows an expansion (4.1). This expansion (4.1) is that which allows the carriage (6) of the second slat (2) to have a certain capacity to turn for the clearance and to be able to fall for the effect of gravity when this is not obviated by the vertical reaction which results from the force applied by the first slat (2) through the oblique wedged surfaces (6.1, 6.2).

Figure 7 is a detail of the end of the first slat (2) with the carriage holder (6) which shows the oblique wedged surface (6.1) intended to rest on the also oblique wedged surface (6.2) which is present in the carriage holder (6) of the adjacent slat (2), in this case the second.

In the tilting arm (7) the nipple (7.2) is shown from behind which forces its descent, and thereby also of the rod (3), being likewise shown that in the base the end of a recovery spring (7.3) emerges. This recovery spring (7.3) assures a tendency of the tilting arm (7) to rise up so that in the reverse movement of stowing the slat (2), the passage of the nipple (7.3) through the beginning of the secondary channel (5.1) allows the nipple (7.3) to be introduced even though the entrance is in the upper part of the channel of the main guide (4). At this point it is indicated that the stowing of the slats (2) takes place up to a point which is limited by a support element (12) against which a prolongation (13) of the carriage of the pulling slat (10) collides.

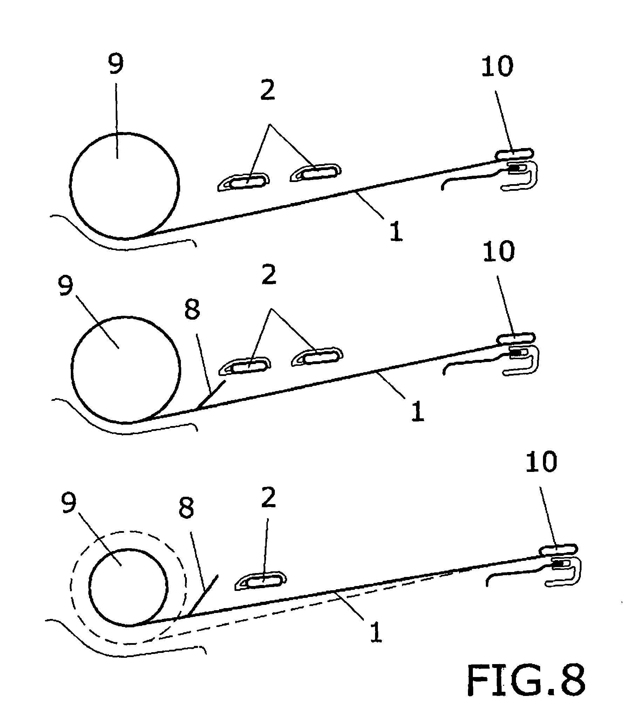

Enlarging on the mode of selecting the slat (2) which corresponds when each of the pockets (8) emerges, figure 8 is included wherein the drum (9) is shown in profile and schematically, and among others, the front edges of the slats (2). In the upper representation it is seen how the maximum roller diameter of the drum (9) gives rise to the lowest possible emergence point of the flexible sheet (1).

The second representation of this figure 8 shows how the first pocket (8) passes below the first slat (2) because it does not reach it but its subsequent elevation does allow the first slat (2) to be trapped.

The third representation illustrates the elevation which has taken place in the emergence line of the flexible sheet (1) through the decrease in the roller diameter. This new elevation allows the pocket (8) to trap the second slat (2).

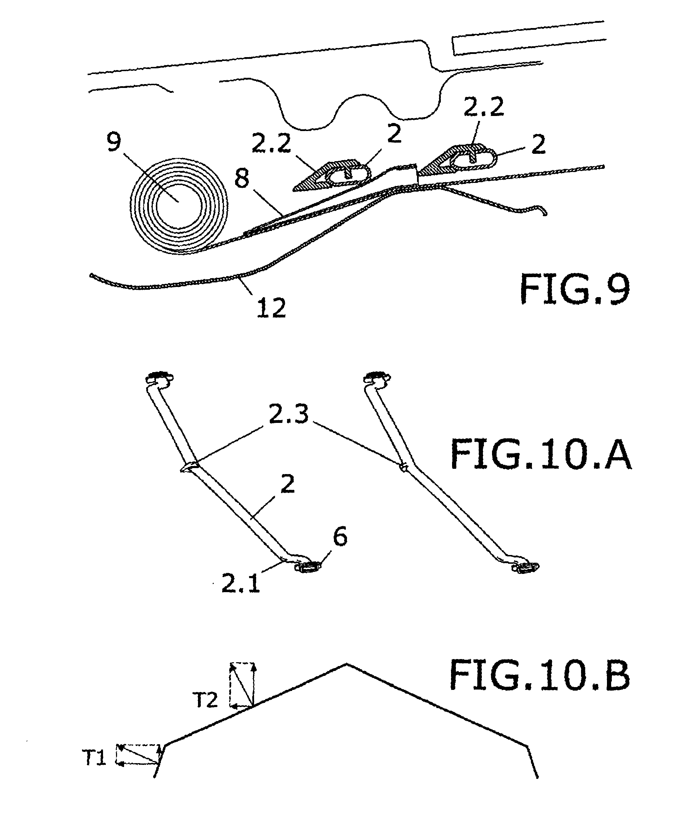

This mechanism is favoured through the descent by turning of the second slat (2) for the action of gravity as already described; nevertheless, it is possible to incorporate an additional means which is represented in figure 9. This additional means is a stamped plate (12) which applies a pressure from below on the flexible sheet (1) between the two sheets so that the elevation is favoured before reaching the slat (1) it being possible to force initially lower positions of the roller drum (9).

In this same invention a set of additional improvements is included which affect the configuration of the slat (2) and the facility to assemble and dismantle the unit.

In figure 10.A two slats (2) are shown with a configuration which not only has oblique flanks (2.1), but also their general configuration is V-shaped. The schematic of figure 10.B shows the resolution of forces for the reaction produced in the support against the bottom of the pocket (8). On the oblique ends (2.1) there is a substantial transversal component (T1) of the reaction which tends to tighten the flexible sheet (1) according to the transversal direction; and the central part also has a transversal component (T2) which serves the same purpose. The smaller angle reduces the value of the modulus of this transversal component but it allows such a resultant to be present over the whole length of the slat (2).

In figure 10.A a fluke (2.3) is also shown which serves to facilitate the entrance of the slat (2) into the pocket (8). This fluke (2.3) can be an additional piece as occurs in the representation on the left or it can be integrated in the body of the slat (2), a situation which is shown on the right.

The use of this type of slat (2) imposes a configuration of the pockets also V-shaped so that the front edge of the slats (2) are in contact with the bottom of the pocket and the transversal components (T1, T2) are present which facilitate the tensing of the flexible sheet avoiding the presence of wrinkles.

In figure 11 not only is an example of these pockets represented but also by dashed line the presence is represented on the internal face of a band (8.1) the function of which is that of favouring the pocket (8) being open at least at the point where it encounters the entrance fluke (2.3). For this reason, the band (8.1) can be of the length which corresponds to the width of the fluke (2.3) or of greater width even reaching the overall width of the pocket (8).

In figure 12 a detail is shown of a mode of configuring the fluke (2.3) as a piece independent of the slat (2). This fluke (2.3) can be made of metal or plastic. It is important that there are no parts of this piece (2.3) in the area of coupling between the slat (2) and the flexible sheet (1) because otherwise a mark would be seen on the visible face of the flexible sheet (1) toward the interior of the vehicle compartment. The indispensable geometric elements in the configuration of this fluke (2.3) are the final slope (2.3.1) and the tip (2.3.2). The rest is support, the internal face being that which in this case has a retention element (2.3.3) for assembly on the slat (2). The height of the fluke (2.3) is important in the selection by heights.

Regarding the technical details in connection with the facility to assemble and dismantle, figure 13 shows the pulling slat (10) with a casing (10.1) which clasps it and is integral with the flexible sheet (1) which has to be pulled. The casing (10.1) can be opened on the side opposite the pulling direction in order to be unfastened from the slat (10). When unfastened, the casing (10.1) is taken to the drum (9) by the roller action. In this case, the axle of the drum (9) incorporates some means of securing by clipping which allows the extraction of the flexible sheet (1) together with the roller drum (9). The slats (2) remain installed in the rails since the withdrawal of the flexible sheet (1) has made the pockets (8) and the slats (2) independent.

Use is made of figure 14 to comment the application of the solution of the invention to the use of closed pockets (8). In this figure 14 a schematic is shown in longitudinal section of the device wherein the pockets are now prolonged until reaching the pulling slat (10). The operation is the same only that the pulling slat (10) is reached by as many flexible sheets as there are pockets (8) plus the base flexible sheet (1).

All the explanations given with the open pockets (8) are valid simply considering that the trapping of the slat (2) in the pocket (8) must be considered as the slat (8) reaching the bottom of the pocket (8) applying force to achieve the tension. The essential nature of the invention based on the use of the pressure rod (3) is not modified because the rod (3) is inserted adjacent to the pocket (8) which has to be pressed and can be covered on top by the pocket (8) associated with the slats (2) which are arranged on the side of the drum (9).

Although in the description of the examples the rod (3), its tilting arm (7) and the pivot (7.2) have been considered as independent elements, it is possible that they be integrated in a single piece. For example, as is shown schematically in figure 16, it is possible that the rod (3) be prolonged beyond the tilting arm (7) in a fold which serves as pivot (7.2) and finishes its end in the turning point by way of tilting arm (7). In the representation of the figure the rod is prolonged slightly more with respect to the dashed line which indicates the geometric tilting axis. Thus the rod (3) would have incorporated the pivot (7.2) and the tilting arm (7) so that it would be configured by means of folds.

## Claims

1. Shading device for vehicle roofs with a transparent element of those constituted by a curtain wrappable on a roller drum (9) located in the rear part of the roof and by a first strong element or pulling front slat (10) and by at least two second strong elements or intermediate slats (2) intended to stiffen the flexible sheet (1) and which slide secured by lateral carriages (6) which slide on some lateral guides (4) located on both sides by the pulling of some pockets (8) joined to the flexible sheet (1) and which progressively emerge from the roller drum (9) during the extension in the longitudinal direction of the flexible sheet (1) along the roof of the vehicle **characterized in that** each of the second strong elements or slats (2) have a third strong element or transversal rod (3) supported by some tilting arms (7) secured to the lateral carriages (6) intended to apply pressure on the pocket (8) when the pocket (8) traps the second strong element or slat (2) for the pulling thereof.

2. Shading device for vehicle roofs with a transparent element according to claim 1 **characterized in that** the tilting arm (7) has a nipple (7.2) which slides in the channel (5.1) of a secondary guide (5) converging in the main guide (4) so that the displacement of the slat (2) and its carriage (6) results in the nipple (7.2) descending until being introduced in the main guide (4) causing the descent of the tilting arm (7) and also of the rod (3) against the slat (2).

3. Shading device for vehicle roofs with a transparent element according to claim 2 **characterized in that** the tilting arm (7) has a recovery spring (7.3) which tends to raise the arm (7).

4. Shading device for vehicle roofs with a transparent element according to claim 2 **characterized in that** the carriage (6) supporting the slat (2) has a cavity (6.3) to allow the descent of the rod (3) without mechanical interference with the body of the carriage (6).

5. Shading device for vehicle roofs with a transparent element according to claims 1 and 2 **characterized in that** the tilting arm (7) and the nipple (7.2) are configured by means of folds in the rod (3).

6. Shading device for vehicle roofs with a transparent element according to claim 1 **characterized in that** the pockets (8) are open.

7. Shading device for vehicle roofs with a transparent element according to claim 6 **characterized in that** the mode in which the pocket (8) which emerges from the roller drum (9) selects the slat (2) which it has to trap and subsequently pull is by the variation in height of the different pockets (8).

8. Shading device for vehicle roofs with a transparent element according to claim 7 **characterized in that** the variation in height which the pockets (8) suffer is due to the variation in height which the emergence line of the flexible sheet (1) of the drum (9) suffers when the diameter of the roller decreases.

9. Shading device for vehicle roofs with a transparent element according to claim 6 **characterized in that** the number of slats (2) is two.

10. Shading device for vehicle roofs with a transparent element according to claim 9 **characterized in that** the second slat (2), that most proximate to the roller drum (9), is capable of turning so that by the action of gravity and reaction of the recovery spring (7.2) the edge of the slat (2) facing the drum (9) descends being located in a position which allows its capture by the pocket (8) which emerges from the drum (9) in the unrolling action.

11. Shading device for vehicle roofs with a transparent element according to claim 10 **characterized in that** the turning capacity of the second slat (2) is due to the presence of an expansion (4.1) in the guide (4).

12. Shading device for vehicle roofs with a transparent element according to claim 9 **characterized in that** each of the carriages (6) has an oblique wedged surface (6.1, 6.2) so that, in the stowing position, the first slat (2) applies a force against the second slat (2) giving rise to a force of vertical reaction on this second slat (2) in such a way that it is prevented from turning and the edge facing the drum (9) descends to allow the passage of the pocket (8) emerging from the drum (9) so that the pocket (8) passes underneath without trapping the slat (2).

13. Shading device for vehicle roofs with a transparent element according to claim 7 **characterized in that** use is made of a plate (12) stamped to apply pressure under the flexible sheet (1) forcing the elevation thereof to facilitate the pocket (8) trapping the slat (2).

14. Shading device for vehicle roofs with a transparent element according to claim 6 **characterized in that** the pocket (8) has a band (8.1) for stiffening.

15. Shading device for vehicle roofs with a transparent element according to claim 14 **characterized in that** the band (8.1) for stiffening is on the internal face of the pocket (8).

16. Shading device for vehicle roofs with a transparent element according to claim 1 **characterized in that** the fastening of the flexible sheet to the strong element or pulling slat (10) is implemented by means of a detachable casing (10.1) and the fastening of the drum (9) with its support is implemented by means of clipping the unit being formed by the casing (10.1), the flexible sheet (1) and the detachable roller drum (9).

17. Shading device for vehicle roofs with a transparent element according to claim 6 **characterized in that** the number of second strong elements or intermediate slats (2) is greater than two.

18. Shading device for vehicle roofs with a transparent element according to claim 17 **characterized in that** the second strong elements or the intermediate slats (2) or the first strong element or pulling slat (10), or both, have surfaces (6.1, 6.2) wedged two by two, the strong element or slat (2) near to drum (9) having in each pair the capacity to turn where with these wedged surfaces (6.1, 6.2) a vertical resultant force is obtained in the mutual support.

19. Shading device for vehicle roofs with a transparent element according to claim 1 **characterized in that** the slat (2) has a V-shaped configuration as well as some oblique flanks (2.1) for obtaining a transversal tension (T1, T2) in the flexible sheet (1).

20. Shading device for vehicle roofs with a transparent element according to claim 19 **characterized in that** the slat (2) has a fluke (2.3) to facilitate the entrance thereof in the pocket (8).

21. Shading device for vehicle roofs with a transparent element according to claim 20 **characterized in that** the fluke (2.3) is incorporated in the slat (2) itself.

22. Shading device for vehicle roofs with a transparent element according to claim 20 **characterized in that** the fluke (2.3) is an independent piece which has a slope (2.3.1), a tip (2.3.2) for entrance and an element (2.3.3) of retention with the slat (2).

23. Shading device for vehicle roofs with a transparent element according to claim 1 **characterized in that** the pockets (8) are closed.

24. Shading device for vehicle roofs with a transparent element according to claim 1 **characterized in that** the second strong elements or intermediate slats (2) have projections on their upper surface which together with the support by pressure of the third strong element or rod (3) improve the securing of the flexible laminar element (1).
